# EUROPEAN PATENT SPECIFICATION

(11) **EP 3 790 793 B1**
(45) Date of publication and mention of the grant of the patent: **10.01.2024**
(21) Application number: 19800521.7
(22) Date of filing: 07.05.2019
(51) Int. Cl.: B63B 39/00, F03B 13/10, F03B 13/12, F03B 13/14, H02K 7/00, F03B 13/18, B63B 35/44, F03B 13/20, H02K 7/18

(54) **HIGH CAPTURE EFFICIENCY WAVE ENERGY CONVERTER WITH IMPROVED HEAVE, SURGE AND PITCH STABILITY**
WELLENENERGIEWANDLER MIT HOHER ERFASSUNGSEFFIZIENZ UND VERBESSERTER LATERAL-, VERTIKAL- UND ROTATIONSSTABILITÄT
CONVERTISSEUR D'ÉNERGIE HOULOMOTRICE À HAUTE EFFICACITÉ DE CAPTURE AVEC STABILITÉ AMÉLIORÉE VIS-À-VIS DU PILONNEMENT, DU CAVALEMENT ET DU TANGAGE

(30) Priority: 08.05.2018 US 201862762534 P; 05.10.2018 US 201816153688
(43) Date of publication of application: 17.03.2021
(73) Proprietor: Rohrer Technologies, Inc., York, ME 03909 (US)
(72) Inventor: ROHRER, John, W., York, ME 03909 (US)
(74) Representative: Fuchs Patentanwälte Partnerschaft mbB
(86) International application number: PCT/US2019/031198
(87) International publication number: WO 2019/217475

(56) References cited:
- WO-A1-2017/025544
- WO-A1-2017/143214
- WO-A2-2014/052953
- WO-A2-2017/062528
- WO-A2-2017/062528
- US-A1- 2012 319 406
- US-A1- 2017 363 058
- US-A1- 2019 040 840
- US-B1- 6 595 725

## Description

### FIELD OF THE INVENTION

This invention relates to an improved means to stabilize a floating or semi-submerged apparatus such as a floating offshore wind turbine base or other floating marine platform against undesirable wave and wind-gust-induced motion. More particularly, the invention relates to an improved means for stabilizing a floating or semi-submerged wave-energy capture apparatus in water against undesirable motion produced by wave or wind forces applied directly to a base or frame or reaction body or indirectly by a first body or float attached to the second body in such a manner to permit the transmission and the conversion of such wave or wind forces applied to the first body.
The invention is utilized to stabilize a second reaction body or base of a multi-body Wave Energy Converter (WEC), utilized for converting ocean wave energy into electricity, against wave induced forces applied to a first or adjacent body(s) or floats through drive arms or hinged joints connected to a Power Take-Off (PTO) affixed to either body or base.

### BACKGROUND OF THE INVENTION

Ocean waves are produced primarily by wind, which is produced by solar energy. While ocean wave energy is a huge global renewable energy resource, usually with several times higher energy density (watts/meter²) than the wind energy producing waves (as wave energy passes through a near surface vertical plane parallel to oncoming wave fronts), solar and wind (including shallow water offshore wind) have dominated global renewable energy capacity additions in recent years. Ocean wave energy and wind energy deployed in favorable sites have comparable 30% to 45% annual capacity factors. Since both utilize "free" renewable energy, CapEx (capital expense per MW of capacity) becomes the dominant competitive factor.

Utility-scale wave farms require WECs that can provide a levelized cost of power (LCOP) competitive with solar, wind, and other renewables. Renewables do not incur significant fuel costs and, like offshore wind farms, do not utilize on-site operators. Like offshore wind farms, maintenance and depreciation costs are likely to be a fixed portion of initial installed capital expenses (CapEx/MW). Estimated wave farm annual capacity factors are also estimated to be comparable to wind farms (at 30%-45%). This makes CapEx/MW the primary determinant of WEC economic viability. To obtain competitive minimum CapEx/MW, WECs will likely have to be deployed on the ocean surface in deep water where wave energy is greatest. Competitive WECs will also likely have to capture both heave (vertical or potential) and surge (kinetic or lateral) wave energy (multi-mode capture), each comprising exactly 50% of total wave energy in deep water (depth over 1/2 average wave length). Multi-mode WECs operating on the surface in deep water require at least two linked bodies, at least one floating and moving in reaction to wave heave and surge forces, and a second body resisting the movement of the first body through a power take-off (PTO) mechanism converting the force derived from the relative motion between the bodies. While a surface buoy with a seabed-attached tensioned-cable drive requires only one floating body, it can only capture heave and not significant surge wave energy.

Wave energy's delayed commercialization is due in large part to the profusion of unique ocean Wave Energy Converter (WEC) design concepts being proposed resulting in the lack of "convergence" on a generally recognized "best WEC" (most cost effective and reliable WEC design). The high capital cost (CapEx/MW) and low wave energy capture efficiency of the few first-generation WEC designs, which have proceeded to ocean trials at large scale to date, have also dampened investment interest. Today's offshore wind farms (primarily located in Europe) that use turbines with seabed affixed towers are limited to about 50 meters sea depth. Wind turbines with floating bases facilitate wind farms at greater depths.

The key to lower WEC CapEx/MW is low weight (since both offshore wind turbines and WECs use similar marine steel and composite structures and have similar electrical components). In floating marine vessels, including ships, vessel weight is largely determined by vessel volume. There is a growing recognition that deep-water-deployed, terminator-type WECs using broad-beam surface floats, which can intercept a maximum amount of energy containing wave fronts per cubic meter of volume, per tonne, and hence per cost of float volume purchased, may emerge as the most cost competitive (CapEx/MW) utility scale WECs.

Many semi-submerged floating marine bodies or vessels, including WECs and deep-water-deployed offshore wind turbines on floating semi-submerged bases, require lateral (surge), vertical (heave), and/or pitch (rotational) stability of their bases or frames or reaction bodies against wave or wind-force-induced motion, for acceptable performance. Most WECs deployed in deep water on the ocean surface (where wave energy is highest) utilize two or more linked bodies wherein the wave induced relative lateral, pitching, or heaving motion between such bodies are dampened by, and drive, at least one Power Take-Off (PTO) mechanism capturing electric, hydraulic, or pneumatic energy. If the PTO damping force between linked bodies is too large or at least one of the bodies (the base or reaction body) is too small, then the relative motion between the linked bodies is reduced to the point where captured wave energy work (the wave force X of the relative motion between bodies) also is reduced. If the PTO damping force is too weak, relative motion between the bodies increases but less wave energy work is also captured. A reaction body can be motion stabilized if it is large enough to span at least two wave crests but with typical ocean wave lengths of 100-300 meters, this can become cost prohibitive.

Another method of motion stabilizing a floating marine body, such as with the use of at least one or two or more linked WEC bodies, is to make at least one body substantially more voluminous and massive than the other floating or semi-submerged body (bodies) or utilize a fixed body like the seabed, a seawall, seabed-affixed tower, piling, or other fixed structure as the reaction body. For example, one or more surface floats can be mechanically linked to a more massive barge or larger float. Because the cost (CapEx) of marine bodies and vessels are approximately proportional to their volume and displacement or weight, increasing the size, weight, and hence cost of at least one WEC body to stabilize that body and increase the relative motion between linked bodies can be economically unaffordable. Using seabed affixed structures in deep water can also be cost prohibitive and can prevent WECs or floating wind turbine bases from pivoting or self-orienting into the oncoming wave or wind direction, or to rise or fall to accommodate tidal changes in the Still Water Line or "SWL".

It is also possible to increase the PTO-damped relative motion between two or more linked WEC bodies by delaying the lateral (surge) or pitch (rotational) recovery of one WEC body by designing each with very different natural frequencies (determined by mass distribution, moment of inertia, center of buoyancy, and hydrodynamic drag properties) and the timing and application of the PTO-damping force in such manner that the first body (or base) is returning (recovering) from the prior wave-induced displacement while the next wave crest is concurrently moving the second-linked body (bodies) (or floats).

It is often desirable to also reduce the wave-induced vertical (heave) motion of at least one semi-submerged body or reaction body. This is often accomplished by incorporating or attaching to the first body (or base) one or more substantially vertical spars or frame members or beams or columns that protrude deeply into the water column (typically 15-30 meters deep) where the water is relatively calm, and either attaching high-density ballast near the bottom of such spar(s) or column(s), or attaching a drag plate of relatively large horizontal surface area near the bottom of such vertical spars which plate entrains water mass above and below it to thus reduce the base-attached spar's vertical motion.

High wave-energy-capture-efficiency WECs must absorb a majority of both heave (potential or vertical component) and surge (kinetic or lateral component) wave energy (multi-mode energy capture), as each represents 50% of total wave energy in "deep water" (depths exceeding 1/2 average wavelength). These are often referred to as multi-capture-mode WECs. WECs that only move vertically (including axisymmetric "point absorber buoys") only capture a portion of the heave wave-energy component and little or no surge component. WECs employing predominantly lateral displacement bodies, (like near-shore, shallow-water-deployed "surge flap" type WECs), capture only a portion of the "surge" wave component and little "heave" energy. A WEC float must employ substantial concurrent vertical and lateral displacement to capture a substantial portion of both heave and surge wave energy.

Most single body WECs (surface floats attached to the seabed with tensioned cables) are ineffective at capturing surge wave energy (50% of total wave energy) and their axisymmetric shape provides negative economies of scale (float-vessel volume or area increases exponentially when diameter and capture width increase linearly). Two body WECs, which are deployable on the ocean surface in deep water (where wave energy is greatest), can utilize wide broad-beam floats oriented or self-orienting parallel to oncoming wave fronts and be configured to capture both heave and surge wave energy. Detrimentally they do, however, require the cost of a second (reaction) body, which is usually at least as massive (hence as costly) as the first (surface float) body. Most two or multi-body WECs become progressively less efficient as wave periods increase from small choppy five-second waves to larger, more energetic fifteen-second swells, and as applied, PTO damping forces are increased. Both cause one floating body to rotate or translate less relative to the second or adjacent floating body which reduces the relative motion (and hence energy capture) between them.

It is highly desirable to have the second (or reaction) body be much smaller than, and weigh substantially less than (hence cost less than), the first body to which wave forces are applied and yet have the second body well stabilized against wave or induced forces. This can be accomplished by judiciously using second-body-entrained seawater mass and/or at least one tensioned cable seabed attachment (allowing the seabed to provide at least part of the second body mass). For most WECs with two or more linked bodies, maximum wave energy capture requires varying the damping force using complex damping force algorithmsincluding at times, the application of reactive or input power--throughout each wave cycle.

### OBJECTS OF THE INVENTION

The objects and principles of the present invention are primarily described and illustrated using deep-water-deployed, terminator-type WECs that utilize one or more adjacent elongated wave-front parallel surface floats which floats concurrently move both vertically and horizontally in response to both wave-induced heave and surge forces for the advantageous low CapEx/MW and higher capture efficiency reasons described previously. The objects and principles of the present invention, however, are also applicable to, and inclusive of, other types of WECs, including axisymmetric and non-axisymmetric one and two-body point absorbers, hinged multi-body articulators, and oscillating water column (OWC) WECs, among others and also to other semi-submerged floating bodies including offshore floating wind turbine bases and other floating marine platforms.

One object of the present invention is to substantially reduce undesired wave, wind, and/or PTO-induced surge or lateral motion, heave or vertical motion, or pitch or rotational motion, or to increase desirable delayed recovery of such motions, to surface, semi-submerged and submerged marine bodies utilized in WECs, floating wind turbine bases or other buoyant marine structures by applying counter moments that oppose such wave or wind-induced motions. Such counter moments can be provided by: a. water mass entrained via rigid or flexible judiciously positioned drag plate or plane surfaces attached to the body(bodies) to be motion stabilized; b. water mass contained or entrapped within rigid or flexible-walled judiciously positioned vessels attached to such bodies; and/or c. judiciously positioned cable or spar attachments secured to the stabilized bodies directly or indirectly attached to the seabed or seabed-affixed structures.

Another object of the present invention is to provide a two-body WEC wherein the displaced volume, mass, (and hence potential cost), of the second stabilizing body is substantially less than the first (float) body while maximizing the wave-induced relative motion between the bodies throughout a broad spectrum of wave periods and wave heights.

A further object of the present invention is to configure the linkage and applied damping forces between two WEC bodies so as to prevent the wave forces applied to the WEC's floating first body from substantially moving the second body in such directions that the relative motion between the two bodies is substantially reduced.

A still further object of the present invention is to increase the "relative motion" between two attached WEC bodies beyond what is obtainable by maintaining the second body relatively stationary to the first body by establishing substantially different natural frequencies for each body (as determined by the mass distribution, center of gravity, moment of inertia, center of buoyancy, and hydrodynamic drag of each), by adjusting the first to second body linkage configuration, by adjusting the level and timing of PTO-applied damping forces, or any second-body-to-seabed connection such that the first floating body is moving upward and/or rearward in response to wave-induced forces while the second body is concurrently moving downward and/or forward, i. e., rebounding from a prior wave, during at least a part of most wave cycles, thus increasing the relative motion and hence the power capture between the two bodies (wanted relative motion).

Another object of the present invention is to more effectively and efficiently utilize entrapped, (as in tanks, enclosed vessels, or bladders), or entrained, (as in drag plates or planes), seawater, rather than expensive steel, composites, concrete structural materials or other mass, attached to, or integral with, the first or second body to economically and effectively reduce or eliminate unwanted relative motion or increase wanted motion between the two bodies.

A further object of the present disclosure is to attach the second body to the seabed either directly through at least one tensioned cable, through an intermediate structure or a buoyant body attached to the seabed with at least one tensioned cable, or to attach the second body to the seabed through a seabed-affixed piling or tower, such attachment configured to apply a moment against the second body to reduce or eliminate unwanted relative motion or increase wanted relative motion between the WEC's first floating body and the second body.

A further object of the present invention is to configure the intermediate attachment between the WEC's second body and the seabed-attached tensioned cables such that unwanted relative motion between the bodies is reduced or wanted relative motion is increased while eliminating or reducing the need for means to enhance the second body's mass such as by using drag plates or enclosures to entrap or entrain seawater mass.

A further object of the present invention is to achieve any of the prior-stated objects while providing a WEC with one or more adjacent wave-front parallel surface floats that remain self-orienting to oncoming wave fronts and/or self-adjusting to tidal changes to the mean water level or still water line (SWL).

A further object of the present invention is to achieve any of the prior objects while providing a WEC producing reduced energy loss from "back waves" caused when the WEC surface floats are forced rearward and upward, while being resisted by PTO-damping forces, by wave crests impacting the float front or buoyantly lifting the at least one float.

A further object of the present invention is to achieve at least one of the prior stated objects while providing a WEC with one or more surface floats securely protected from the waves of severe sea states by the total submergence of the floats via force (pulling or rotating the floats substantially below their normal operating depth), by flooding part or all of the floats' interior cavities to reduce the floats' buoyancy, or by combinations of both force and seawater flooding.

A further object of the present invention is to achieve at least one of the prior objects while providing a means to adjust a WEC's first and/or second body's submerged depth for tidal compensation, performance optimization, or detuning protection during severe sea states by altering the mass or submerged depth of the first and/or second bodies by mechanical means or by admitting or exhausting seawater into ballast tanks or cavities within or affixed to the bodies.

A further object of the present invention is to achieve at least one of the prior objects while directly utilizing a geared or ungeared WEC rotary electric generator (power take-off or PTO) to eliminate the need for costly intermediate hydraulic or pneumatic power-conversion equipment and their attendant large capital costs (CapEx) and efficiency losses.

A further object of the present invention is to disclose a WEC with high wave-energy-capture efficiency over a broad spectrum of wave periods and wave heights typically found in the higher wave-energy sea-condition locations found around the world, typically from about five to fifteen second wave periods and from about one to about five-meter wave heights.

### SUMMARY OF THE INVENTION

It is desirable to have the first floating body as wide as possible and oriented parallel to oncoming wave fronts to intercept the maximum amount of energy contained in a wave front per unit float volume, mass, and hence cost. While it is possible to have one or more second body(bodies) hinged to the first body in the form of a large float or barge of comparable (or larger) surface area, volume, mass, and hence cost, it is preferable, if possible, to have the second "reactive body" substantially smaller in volume, mass, and cost while still allowing maximum wave-force-induced relative motion between the first (float) and the second (reactive) body.

The present invention allows use of a low-volume, low-mass, low-cost second reactive body in a two-body WEC that incorporates a seabed mass, connected to the second reactive body by at least one tensioned cable in a unique configuration, to supplement the second reactive body mass and stabilize the body against wave-induced forces applied to it by the first body (float) through resistive torque or force from the PTO.

This is accomplished by using a mooring beam rigidly attached to the second body and extending substantially forward (up sea) from the center of buoyancy of the first (float) body (or combined WEC center of Buoyancy) to a mooring or pivot point located substantially below the still water line (SWL) held in a relatively fixed position by one or more tensioned cables to the seabed.

Combined heave (vertical) and surge (lateral) wave forces acting on the WEC's first (float) body and transmitted to the WEC's second reactive body through resistive force (torque) transferred through the PTO would otherwise cause the reactive body to both rise (in response to wave heave) and concurrently move rearward or rotate rearward (in response to wave surge). This movement and rotation would substantially reduce the relative motion between the two bodies and hence the energy captured (which is equal to force or torque times travel distance). Gravity would return both bodies to their initial positions during ensuing wave troughs.

By selecting both optimum lateral and vertical dimensions between the first float center of buoyancy and the fixed mooring or pivot point, a moment is applied to the second reactive body (about the mooring or pivot point) by lateral wave-surge forces that substantially counters a moment (also about the mooring or pivot point) by vertical wave heave forces. It is recognized that the magnitude of wave heave and surge forces acting upon the float at any time during a typical 5-15 second ocean wave period will not always be equal. Selection of optimal vertical and lateral dimensions are, therefore, based on average forces. Additional stabilization of the reaction body and/or the mooring or pivot point can be supplemented with placement of drag plates affixed to either having horizontal and/or vertical areas.

### DISTINGUISHING FEATURES FROM THE RELEVANT ART

The Salter-Edinburgh Duck, and several modern Duck derivatives, including the Columbia StingRay, WEPTOS WEC, and Brimes Energy Jellyfish, like the present invention, have one or more adjacent surface floats that collectively have a port-to-starboard width or beam wider than their fore-to-aft depth (broad-beam float) which broad beam float(s), like the present invention, are oriented (or self-orienting) parallel to prevailing or oncoming wave fronts. Unlike the present invention, however, these Duck derivatives have their float(s) attached proximate to, or integral with, a massive, costly semi-submerged central cylinder with a cross-sectional area, volume, mass, and therefore, likely cost substantially exceeding the cross-sectional area of their float(s). The central cylinder internals, including any PTO and any supplemental ballast within or below the cylinder(s) do not rotate with the float and provide part or all of the second reactive body mass opposing the wave-induced float motions. Additional second-body reactive mass in some "Duck Derivatives" is provided by connecting multiple non-rotating central cylinder internals with adjacent cylinder internals.

The Columbia StingRay also has a wide-beam float immediately fore of a large non-rotating semi-submerged central cylinder (named a nacelle) but unlike most Duck derivatives, the fore float is detached from the central cylinder and connected to its PTO, located within the cylinder, by a drive arm. The StingRay also has a second aft float attached to a second PTO, also located within the central cylinder, by a second drive arm. The combined cross-sectional area of the fore and aft floats is substantially less than that of the massive central cylinder. The StingRay also utilizes the twin vertical spar frame with lower drag plate previously disclosed (but not claimed) by Rohrer in U.S. 8,604,631 for additional stability.

The Azure WEC (formerly WET-NZ WEC) utilizes a single float directly hinged at its fore end to a rotary input PTO (a crankshaft driving at least one linear hydraulic cylinder) located on or within a twin vertical spar frame. Unlike the present invention, the float lacks any drive arm connection to its PTO input and its center of buoyancy is located aft of the spar frame and PTO pivot point.

Both the Chinese Sharp Eagle "Wanshan" and the Akers Solutions Aker WEC also utilize broad-beam fore floats which, like the StingRay and the present disclosure, are connected by drive arms to rotary input PTOs mounted on large "second reaction body" barges with mass and cross-sectional areas several times larger than their fore floats. The pivot or hinge points between drive arms and the PTO rotary inputs of the Sharp Eagle are substantially above the still water line (SWL). The Akers WEC, like the present disclosure, has its pivot point substantially below the water line. The Australian Perpetuwave also utilizes broad-beam floats connected by drive arms to PTOs mounted above the SWL to a seabed affixed stationary frame.

There are also multiple examples of two-body (or multi-body) hinged surface floats or rafts including the current Irish Sea Power Platform, the Mocean WEC, Dutch DEXA-Wave and Crestwing WECs, and the older Pelamis and Cockerell's Raft. All these articulating raft-type WECs employ two or more hinged surface floats or rafts using either rotary input PTOs (input at the raft or platform hinge points) or linear input PTOs (spanning the raft hinges) which capture the wave-induced relative motion between adjacent floats or rafts. These articulating raft WECs have a fore-to-aft dimension substantially larger than their beam width. Two linked rafts oriented perpendicular to oncoming wave fronts must have a substantial combined fore-to-aft length, ideally spanning 1/2 of a typical ocean wave length (75 to 150 meters) for maximum relative motion and energy capture between the rafts. Such twin-raft WECs intercept relatively little energy-containing wave front considering their large, and hence expensive fore-to-aft length and float volumes (hence costs) and their relative motion and hence capture efficiency is very dependent upon the fixed fore-to-aft length chosen versus the actual wave length experienced at any given time.

WO 2017/025544 A1 discloses a wave energy converting device for converting water wave energy into electrical power that includes a buoyant float body having a center of buoyancy and secured to a swing arm pivotally secured to a base at a base pivot point. The base pivot point is aft or down sea of the float's center of gravity. A submerged mooring connection point is fixed to the seabed with an elongated mooring beam pivotably connected in a vertical plane to the submerged mooring connection point. A power take-off apparatus is secured within the base and driven by a force generated by the wave-induced relative motion between the float and the base through the swing arm.

WO 2017/143214 A1 discloses a wave-energy converting device having a float with a center of buoyancy and a base have a body or frame with at least one base pivot point. A submerged mooring connection point is motion stabilized, restrained or fixed by a mooring line, mooring buoys, seabed-affixed or semi-submerged spars, pilings, towers, drag planes, ballast, or other securing means. A mooring beam is pivotally connected to the base body or frame in a horizontal and/or vertical plane to the submerged mooring connection point substantially fore and below the float center of buoyancy. A power take-off apparatus is secured to or wit the base and driven by a force generated by the wave-induced relative motion between the float and the base.

WO 2017/062528 A2 discloses a wave energy converting device for converting water wave energy into electrical power that includes a buoyant float body having a center of buoyancy and secured to a swing arm pivotally secured to a base at a base pivot point. The base pivot point is aft or down sea of the float's center of gravity. A submerged mooring connection point is fixed to the seabed with a spar pivotably connected in a vertical plane to the submerged mooring connection point. A power take-off apparatus is secured within the base and driven by a force generated by the wave-induced relative motion between the float and the base through the swing arm.

The present invention is distinguished from the prior art based on the following elements:
1. A multi-bodied WEC has an aft reaction body and a broad-beam fore float (or multiple adjacent floats collectively forming a broad-beam fore float) wherein the aft reaction body has a volume or mass substantially less than the fore float(s).
2. The broad-beam fore float(s) oriented (preferably self-orienting) substantially parallel to oncoming wave fronts.
3. The fore float(s) rotatably connected by at least one drive arm to a PTO in, or on, the aft reaction body at a pivot point or axis aft of the fore float's center of buoyancy and substantially below the SWL.
4. The at least one drive arm with attached fore float is rotatable a full 360° about the pivot point or axis without mechanical interference with the aft reaction body (eliminating severe sea"end stop" problems).
5. The fore float is fully submergible during severe sea conditions either by applying sufficient rotational force through the drive arms and/or by partially or fully flooding with seawater at least one cavity in the fore float to reduce or eliminate its buoyancy.
6. the aft reaction body being or including a mono-spar which contains or has affixed at least one PTO with at least one drive axel driven by at least one drive arm connected to each of the at least 2 floats.
7. The pivot point or axis on the aft reaction body is at least partially stabilized against undesirable wave-induced rotational and/or translational motion by a fore beam or member rigidly connected to the aft reaction body and extending substantially forward of the fore float's (floats') center of buoyancy, the fore beam being pivotably connected to a mooring buoy or mooring point which buoy or point is connected to the seabed by at least one tensioned cable, spar, piling, or structure.
8. The vertical and horizontal distances between the float's (floats') center(s) of buoyancy and the mooring buoy or mooring point is chosen such that the moment produced by wave lateral or surge forces applied to the float(s) is substantially countered by the opposing moment produced by wave vertical heave or buoyant forces applied to the float(s) thus reducing undesirable rotation about, or translation of, the reaction body PTO axis or pivot point, which reaction body rotation or translation would otherwise reduce the relative motion between the reaction body and float(s) and the resultant energy capture.

### BRIEF DESCRIPTION OF THE DRAWINGS

FIG.1 is an isometric view of a wave energy capture device according to a further embodiment of the invention including mooring lines utilizing a frame comprised of two vertical spars where the port to starboard width of the float at full scale is 28 meters and which is designed to produce about 1.5 MW in 4-meter-wave height-seas according to one embodiment of the invention.
FIG. 2 is a perspective view according to another embodiment of the invention utilizing a single vertical truss frame with two adjacent floats each connected to the frame and its PTO via a single swing arm and having a mono-spar reaction body.
FIG. 3A is a side elevation view of the embodiment shown in FIG. 2.
FIG. 3B is a front elevation view of the embodiment shown in FIG. 2.
FIG. 4 is a plot of Relative Capture Width (wave energy capture efficiency) versus Wave Period from wave tank testing of the FIG. 1 WEC at 1/20 scale according to one embodiment of the invention.
FIG. 5 is a side elevation view of a WEC utilizing an upright mono-spar with horizontal and vertical drag plates at its lower terminus, a rigidly affixed lateral mooring beam, and a submerged mooring buoy and point positioned via tensioned cables affixed to the seabed according to another embodiment of the invention.
FIG. 6 is a side elevation view of a WEC similar to the WEC shown in FIG.5 but without the lower mono-spar section and with the mooring buoy and point mounted on a mono-pile according to a further embodiment of the invention.
FIG. 7 is a side elevation view of a WEC with a mono-spar supported by a submerged lateral beam positioned via tensioned cables affixed to the seabed according to a yet further embodiment of the invention.
FIG. 8A is a side elevation view of a WEC similar to the WEC embodiment shown in FIG. 6 with a relatively short lower mono-spar depth (none) and relatively long mooring beam length according to yet another embodiment of the invention.
FIG. 8B is a side elevation view of a WEC similar to the WEC embodiment shown in FIG. 6 with a relatively long lower mono-spar depth and a relatively short lateral mooring beam length according to a still further embodiment of the invention.
FIG. 9A is a plan view of the WEC apparatus shown in FIG. 8A with a relatively smaller diameter geared generator PTO and a large diameter direct drive (ungeared) PTO according to yet another embodiment of the invention.
FIG. 9B is a side elevation view of the WEC apparatus shown in FIG. 8A with a relatively smaller diameter geared generator PTO and a large diameter direct drive (ungeared) PTO according to a further embodiment of the invention.
FIG. 10 is a side elevation view of a WEC similar to the WEC shown in FIG. 6 having a convex versus a concave float front face and upright side plates or shields on the port and starboard sides of the floats according to yet another embodiment of the invention.

### DETAILED DESCRIPTION OF THE INVENTION

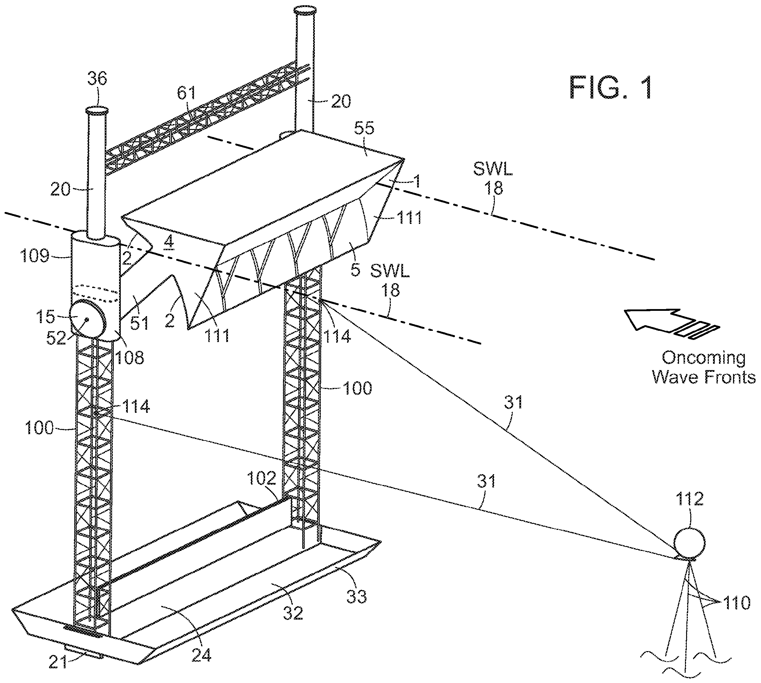

Referring to FIG. 1, a two-body WEC comprising a first body elongated wave front parallel surface float **4** (having deck **55,** front face **1,** rear wall **2** with lower extension **5,** and side shields **111)** is shown attached via swing or drive arms **51,** pivoting about point **52,** to a second semi-submersed twin vertical spar frame or body (having **20** upper frame column with top access hatch **36,** mid-frame **109** w PTO **5** housing, **100** lower frame, and **61** frame cross beam) pivotably attached **114** to a submersed buoyant mooring buoy **112** by twin mooring cables **31** which mooring buoy is affixed to the seabed by three tensioned mooring cables **110.** This embodiment achieves several of the objectives of the subject invention including; 1. A second body (twin vertical spar semi-submersible frame) partially stabilized against unwanted heave and pitch motion by both horizontal **32** and vertical **33** and **102** drag plates, seawater ballast in ballast tank **108,** and solid ballast **21,** 2. Self-orientation of the Float **4** parallel to oncoming wave fronts via weathervane type pivoting about the submerged buoyant mooring ball **112** while providing tidal level compensation using lateral mooring lines **31** 3. a rotary input PTO **15** in or affixed to the frame directly driven by drive arms **51** from the one or more adjacent floats, 4. A float **4** which can be flooded and submerged and rotated (360° or to the 6 o'clock position) for protection during severe seas, 5. A concave arcuate float back **2** which produces little or no energy consuming "back wave" when driven backwards by wave forces impacting the front **1** of the Float **4** while concurrently lifting the float via its buoyancy.

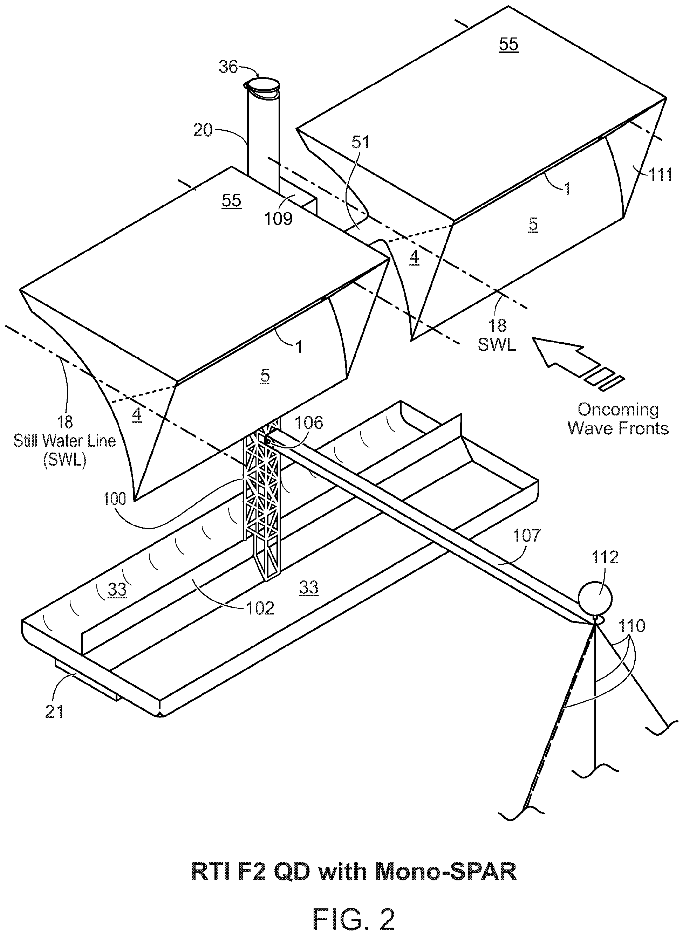

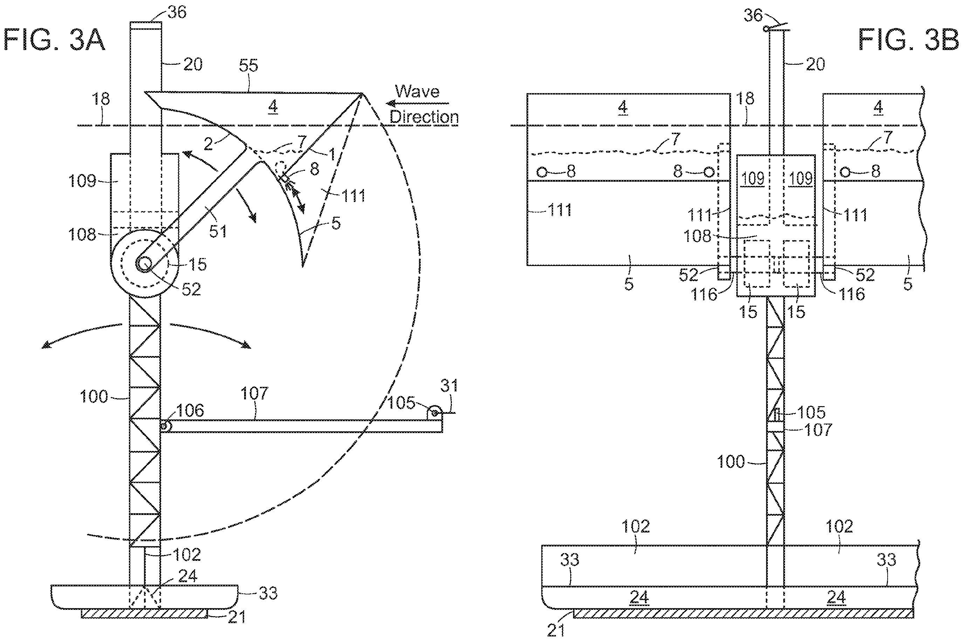

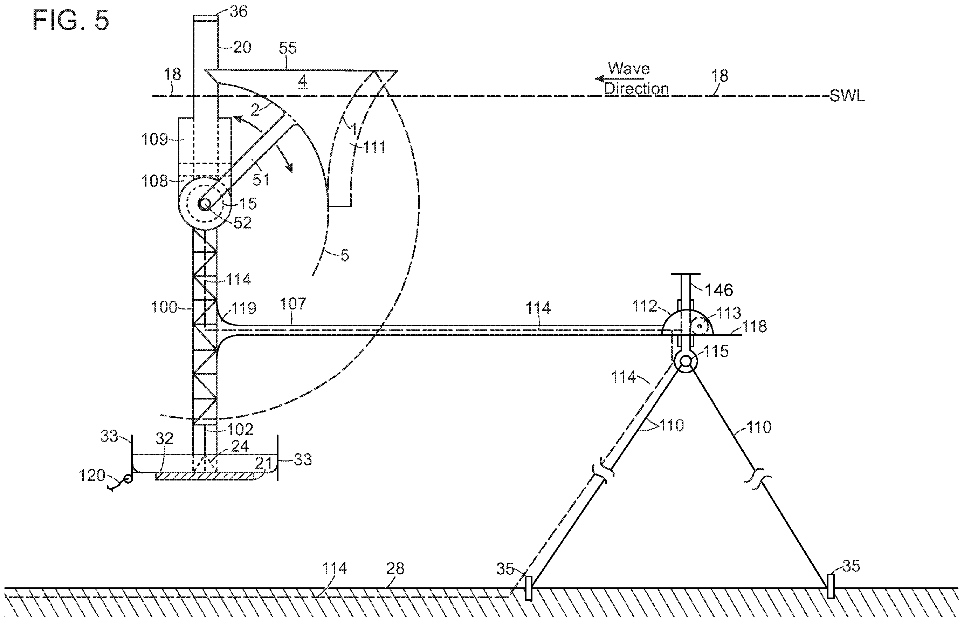

Referring now to FIGS. 2, 3A, and 3B, a WEC similar to FIG. 1 is disclosed but utilizing a single vertical spar frame (again **20** upper, **109,** mid, and **100** lower) with two adjacent elongated wave-front parallel floats **4** (rather than one) with drive arms **51** driving a single or twin PTOs **15** through drive axels **116** which PTOs are within or attached to the spar frame, which frame is attached to a similar submerged buoyant mooring buoy **112** by a lateral beam **107** rather than the two lateral mooring lines **31** shown in FIG. 1. This mono-spar frame provides substantial reduced cost ("CapEx") over the prior twin spar frame of FIG.1. FIGs. 5 through 9, herein (and Provisional Applications 62/707,920 FIGs. 5, 6, and 7 and 62/762,534 Figs. 5 through 9) describe a dual or mono-spar frame with attachment to a submerged buoyant mooring buoy **112** by a lateral beam **107** but in prior `356 the lateral beam **107** is rotatably attached to the second body twin or mono-spar frame by pivoting connection **106** whereas in the present invention, and Provisional '920, the connection between the spar frame **119,** which can have either a single or twin spar, is a rigid connection. This rigid connection, and tensioned seabed affixed cables **110** reduces both frame rearward pitching and upward heaving in response to wave crests which both lift and rotate float 4 upwards ad rearwards as the PTO **15** resists such wave forces. The Still Water Line (SWL) is represented as line **18.**

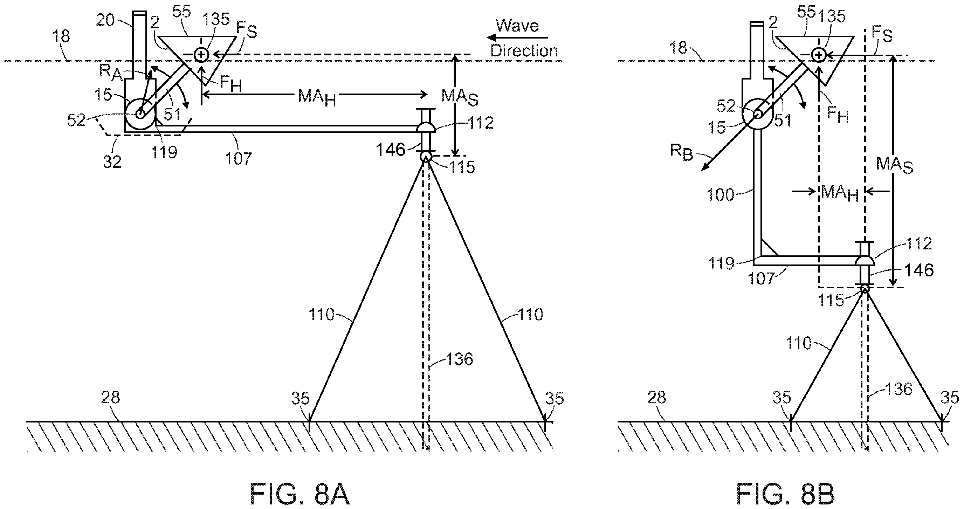

While the floats **4** shown in FIGS. 1 - 3 utilize single swing or drive arm pairs **51** rigidly connected to float **4,** dual swing or drive arm pairs as described in FIG. 8 of 10,094,356, elements **51** and **82,** could have been utilized in FIGs. 1-3 or any of the following embodiments of the present invention. When dual swing or drive arm pairs are utilized, with one arm above the second, both connections of the dual arms **51** and **82,** to float **4** are pivoting, not fixed or rigid as in FIGS. 1-3 herein. Either arm, upper **51** or lower **82** can serve as the drive arm. Dual arms allow the orientation of float 4 to be controlled throughout its motion for somewhat higher wave energy capture efficiency in some wave conditions but at the expense of increased complexity. The upper and lower arms, **51** and **82,** need not be of equal length or parallel.

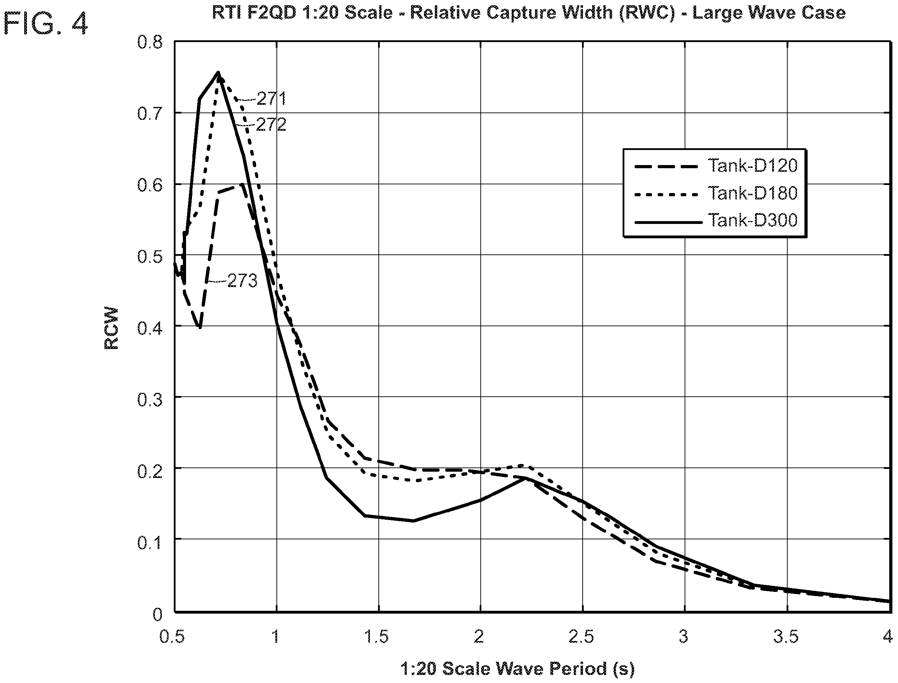

Referring now to FIG. 4, a plot (three solid lines **271, 272, 273)** of Relative Capture Width (RCW) vs Wave Period (in seconds) of a 1/20 scale WEC of the configuration shown in FIG. 1 tested with relatively large random (poly-chromatic) waves is shown. RCW is analogous to wave energy hydraulic capture efficiency (captured wave energy/total input wave energy) excluding PTO mechanical and electrical efficiency losses. These tests were performed at three different PTO damping torque levels (120, 180, and 300 Nm for plots **271,272,** and **273** respectively). While the random wave capture efficiency is extremely high, peaking at over 70% for shorter 0.7 second wave periods (corresponding to about 3.1 seconds at full ocean scale) efficiency drops substantially being only about 20% at 2.25 second periods (10.1 seconds at full ocean scale). Ideally, maintaining random wave capture efficiencies above 50% for typical 5-15 second ocean wave periods would be highly desirable (which no ocean deployed WEC has yet approached). Visual and video observation of the above tests clearly showed the frame (**20** and **100**) clearly start to pitch substantially rearward on wave crests during wave periods exceeding 0.7 seconds (3.1 seconds full scale). When more PTO damping torque was applied, rearward pitching became even more pronounced causing the float-to-frame relative motion and energy capture to decrease.

Most WECs utilizing two or more mechanically linked surface bodies (primarily articulator or terminator type WECs), like the above tests, are more efficient at capturing wave energy during shorter wave periods (under 5 seconds full scale). Those WECs that utilize longer (fore to aft) surface bodies and/or more mass (resulting in more cost or CapEx) can better absorb energy from longer period waves but are less responsive and efficient at energy capture from short-period waves. The embodiments shown in FIGS. 5-10 utilize mooring beam **107** to reduce this undesirable aft-frame pitching without adding additional costly frame stabilizing mass, by producing a major counter moment transferred from the frame through mooring beam **107** to the seabed via mooring cables **110.**

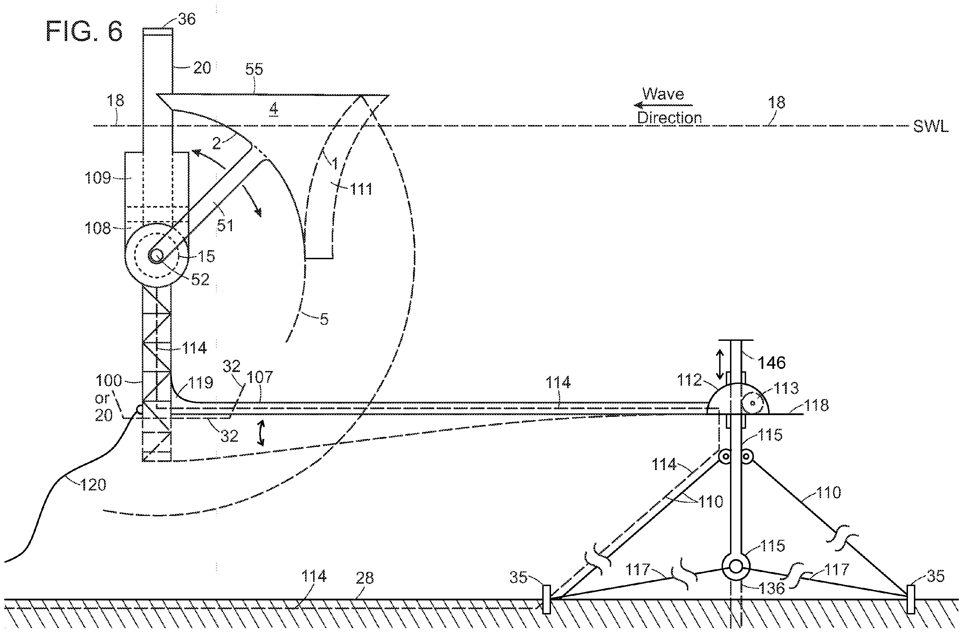

Referring now to FIG. 5, another embodiment of the disclosed WECs is shown with several subtle though critical improvements over the prior embodiments shown in FIGS. 1, 2, 3A, and 3B. Both single and multi-body WECs require a reaction mass to resist and absorb wave-force-induced motion and do work. While this reaction mass can be provided by one or more of the WEC bodies, such as by using large fore-to-aft dimensions and large quantities of steel, or concrete gravity ballast mass, the effective use of entrained (using drag plates or planes) or contained seawater (within an enclosed vessel or cavity) generally provides lower cost or CapEx. Utilizing the seabed as reaction mass can result in even lower CapEx even for deep water deployed WECs where the seabed mass can be utilized by connection with one or more tensioned cables **110** or legs **136** shown in FIGS. 5 and 6 (which also show the routing of power export and communications/control cables **114** from the PTO **15** housing along mooring beam **107,** down tensioned cable **110** through seabed attachment means **35,** along the seabed **28** back to shore.

The embodiment shown in FIG. 5 is similar to the prior embodiments of FIG. 2, 3A and 3B except the connection between the vertical spar frame, **100** and **20,** and lateral beam **107** at juncture **119** is rigid rather than hinged (as shown in FIG. 2 and 3 element **106**). Alternatively, the connection at juncture **119** can be hinged at the top of the connection between spar column **100** and lateral beam **107** and configured such that counter clockwise rotation beyond the original orientation angle between spar **100** and beam **107** (about 90° as shown) is blocked while clockwise rotation during pitch recovery between wave crests is accommodated.

While FIG. 5 shows a mono-spar frame, two mooring beams (each like **107**) also can be rigidly mounted at **119** to a twin spar frame (like as shown in FIG.1) and converge at a submerged mooring float **112** as shown in FIG. 5. When vertical (heave) and lateral (surge) wave forces from each oncoming wave crest both lift upward and rotate rearward, respectively, float **4,** such rotation is resisted by the damping torque applied by PTO **15** within or affixed to spar frame **100, 109,** and **20.** Such PTO damping torque causes the spar frame **100, 109,** and **20** of FIG. 1, 2, and 3 to rotate (pitch) rearward, reducing the relative motion between drive arm **51** and the frame mounted PTO **15** and hence also reducing the wave energy captured. The rigid frame **100** to lateral beam **107** connection shown in FIG. 5, however, resists the undesirable counter-clockwise aft pitching or rotation of frame **100** and **20** by applying through beam **107** and its rigid connection to the frame **119,** an opposing moment at submerged mooring buoy **112** by its tensioned cable **110** connection to the seabed **35.** If lateral movement of mooring buoy **112** is problematic, the angle between the fore cable **110** and horizontal can be reduced by increasing the fore cable **110** length.

Horizontal drag plate **32** of the embodiments shown in FIGS. 1,2, and 3 with vertical seawater entrainment surfaces, **33** and **102,** are also in the embodiments shown in FIGS. 5 and 6, to limit the upward vertical displacement of PTO input axel **52** which would also reduce the relative rotation (and energy capture) between drive arm **51** and PTO **15.** Chamber **24** can hold additional seawater ballast while plate **21** provides additional solid ballast mass if needed. The upward vertical displacement forces on Frame **100** and **20** in the FIG. 5 embodiment are now, however, significantly reduced, or even eliminated, by the counter-clockwise moment about mooring buoy **112** provided by concurrent lateral wave forces applied against float **4** front face 1 and transmitted through and resisted by PTO **15.** Elimination or substantial size reduction of the drag plate surfaces **33, 32,** and **102** of the FIG. 5 embodiment further results in major WEC CapEx cost reduction.

Because the lateral beam **107** to frame **100** connection shown in FIG. 5 is now rigid, compensation for tidal changes to the SWL will produce changes to both the vertical orientation of the spar frame **100** and **20,** and the lateral orientation of mooring beam **107** that are dependent on both the tidal range and the length of beam **107.** If these changes are excessive, they can be easily accommodated by allowing the mooring buoy **112** to slide vertically on vertical mooring mounting shaft **146** and utilizing a hydraulic, electrical, or mechanical device **113** which allows slow (i.e. hourly) movement of the mooring buoy up and down the mounting shaft **146** but not 5-20 second wave-force-induced motions to alter the position of buoy **112** on shaft **146.** Alternatively, the connection between lateral beam **107** and mooring buoy **112** can be pivoting or hinged (not shown). Slack secondary mooring line **120** can be utilized to prevent the WEC device from completely circling mooring buoy **112** which would either wrap power export and communications cables **114** or require slip ring electrical connections.

Referring now to FIG. 6, an embodiment of the present invention is shown wherein the expensive drag plate surfaces **32,33,** and **102** and gravity mass **21** of the embodiment shown in FIG. 5 are eliminated or substantially reduced in size. The lower portion of vertical spar **100** is likewise eliminated. The moment produced by lateral (surge) wave forces acting on front face **1** of float **4** about submerged mooring buoy **112** approximately counteracts the vertical heave wave forces acting on float **4** that keeps PTO input axis point **52** relatively stationary in both rotation and translation, recognizing that the timing and magnitude of the surge and heave moments each vary with different timing throughout each complete wave cycle (typically 5 to 20 seconds in deep ocean water). Reduction of unwanted rotation (aft pitching) of frame **100** with attached or integral PTO about mooring point **112** can be further facilitated by maintaining vertical shaft **146** in a stationary upright position resisting bending moments applied by mooring beam **107**.This additional aft pitching resistance can be done by extending mooring buoy vertical slide shaft **146** downward and attaching second mooring cables **117** which attachment points to **115** are substantially below the attachments of cables **110.** Alternatively, or additionally, depending on water depth, shaft **146** can be extended into the seabed with shaft extension **136.**

Use of supplemental tensioned mooring cables **117** or mooring vertical shaft extension **136** to the seabed converts the junction of mooring beam **107** and the vertical mooring shaft into an angularly rigid connection (which remains free to pivot in a lateral plane to facilitate the desirable weathervane orienting of the WEC floats parallel to oncoming wave fronts). Mooring beam **107** can be made somewhat flexible to reduce the structural loads on juncture **119** and **146** to mooring beam **107** transmitted down cables **110** and **117** to seabed attachments **35** caused by occasional severe waves. If additional stabilization of frame **100** with PTO **15** against vertical heave translation or rotation about submerged mooring buoy **112** is required, vertical drag plate **32** (dotted) with optional upward **33** (shown) or downward (not shown) oriented edges can be utilized either under frame **100** (shown) or aft of frame **100** mounted to an aft-ward extension of beam **107** (not shown).

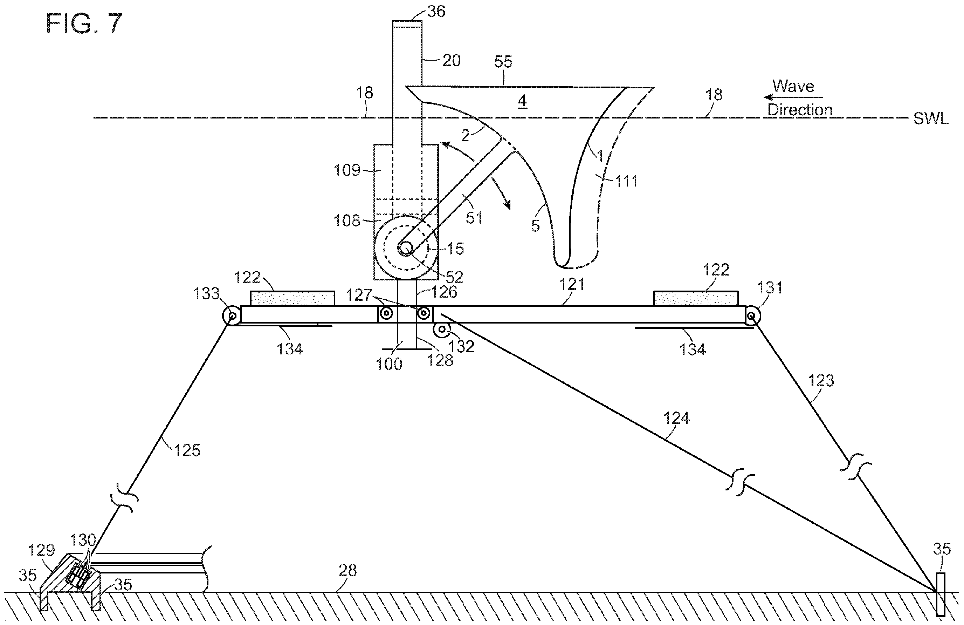

Referring now to FIG. 7, a WEC is shown that incorporates a submerged lateral beam **121** that may be buoyant, rather than the mooring beam **107** and mooring buoy **112** components of the previously described embodiments. Undesirable vertical displacement of PTO input axis **52** is resisted by tensioned cables **123** and **124,** attached to the seabed at **35,** and optional supplemental tensioned cable **125.** Undesirable (aft-ward or counter-clockwise) pitching of vertical spar(s) **20** and **100** are resisted by fore and aft horizontal drag plates **134** and/or contained or entrained seawater mass **122** affixed to the fore and aft ends of lateral beam **121** combined with tensioned cables **123** and **124,** and optional cable **125.** Hydraulic, electric, or mechanical means **127** allow slow vertical movement of the mono-spar or twin spar lower frame section **126** using rack gears **128,** for tidal compensation while preventing rapid wave force induced motion between lower frame **100** and beam **121.** If optional cable **125** is utilized, self-orientation (weathervaning) of the at least one float **4** is maintained by attaching a roller **130** or sliding connection between the lower portion of cable **125** and a substantially horizontal circular or semi-circular tracking mechanism **129.**

Referring now to FIGS. 8A and 8B, a WEC apparatus having the same features as the embodiments shown in in FIGS. 5 and 6 including the rigid vertical spar frame to mooring beam connection at junction **119** but with the horizonal drag plate **32** (dotted) either eliminated or having a reduced area. FIGS. 8A and 8B illustrate how unwanted wave-heave-force-induced vertical displacement of PTO input axis **52** or unwanted counter-clockwise rotational (pitching) displacement about PTO input axis **52** can be substantially or totally eliminated without the use of costly ballasts or drag plates by optimal configuration of the dimensions of lateral beam(s) **107** and vertical frame spar(s) **100.**

Both the heave and surge forces acting on the center of buoyancy and the forward wave-impacting face of float **4,** respectively, during each wave cycle will change during each wave cycle but these forces are comparable since heave and surge wave energy components are identical in deep water waves. If as shown in FIG. 8A, mooring beam **107** and the lateral distance to the center of buoyancy of float **4** is long relative to pivot point **115** below mooring ball **112,** then the heave moment arm MA_{H} producing unwanted vertical upward translation of PTO input axel **52** is large compared to the countering surge moment arm MAₛ and the resultant force vector and translation of PTO axel **52,** shown as vector R_{A}, is upward as shown in FIG. 8A, which is undesirable and will reduce the relative motion between drive arm **51** and PTO input axel **52.** If, on the other hand, as shown in FIG. 8B, the vertical distance from pivot point **115** to the float **4** center of buoyancy is large relative to their lateral distance, then the surge moment arm MAs is large relative to the heave moment arm MA_{H} and the PTO input axel will move downward and rearward with each wave crest, the opposite of FIG 8A. The orientation of lower frame spar **100** and mooring beam **107** need not be at right angles as shown and can be combined into a single inclined or curvilinear beam (not shown) without changing the heave or surge moment arms. Between case 8A and case 8B the present invention utilizes an optimum ratio of MA_{H}/MA_{S} where the translation and pitch rotation of PTO input axel **52** is minimized throughout the average wave cycle for maximum wave energy capture efficiency. Changing the applied PTO **15** resistive or damping torque throughout each wave cycle will also change the heave and surge moments during each cycle.

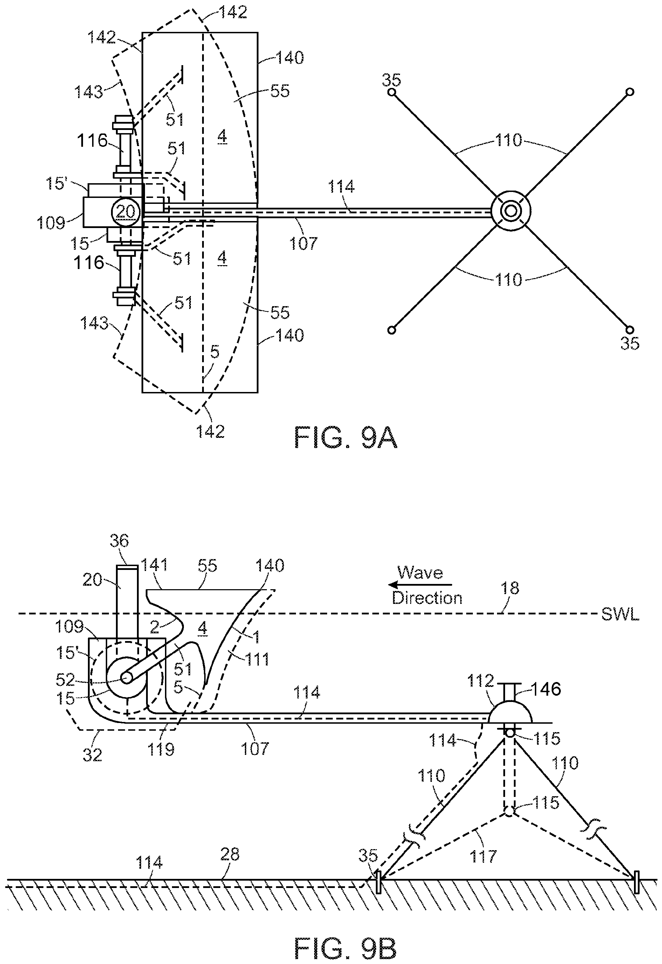

Referring now to FIGS. 9A and 9B, a WEC apparatus shown in plan and side elevation views, respectively, has features similar to the WEC apparatus shown in FIGS. 5 through 8. In this embodiment, the use of beam **107** and its rigid connection to the lower portion of the second reaction body or frame creates a wave-induced surge moment about pivot point **115** that counters the heave moment about **115** reducing the area or completely eliminating the need for horizontal drag plates **32.** FIG. 9A shows a mono-spar frame **20** with a twin float **4** embodiment with wave-front-parallel straight-line float front faces **140** or alternatively convex curvilinear front face **142.** In many ocean wave conditions, especially those involving multi-directional and multi-wave length waves, a float with straight forward face **140** will intercept and capture more wave energy per cubic meter, tonne, and hence cost per float. In some sea conditions, especially unidirectional waves of relatively uniform period and height, a curvilinear convex float front face, or in this case twin adjacent curvilinear convex float front faces **142,** will have some wave focusing point absorber effect that can result in higher wave energy capture efficiency.

Figures 9A and 9B also illustrate that the WEC apparatus disclosed herein can utilize a relatively small size rotary input PTO **15** that may be a single or twin (one for each float) low input RPM high torque geared multi-pole permanent magnet AC synchronous motor-generator (PMSC) like those now used in large wind turbines, or a larger diameter PTO **15'** can be utilized that may be an ungeared PMSC motor-generator that are generally costlier but also now utilized in large wind turbines. Alternatively, each float PTO input axel **116** axis **52** can be connected to a single or twin large diameter internal or external toothed bull gear(s), each directly driving a single or multiple smaller generator drive gear(s) (not shown). While FIGs. 2, 3, 5, 6, 7, 8, 9, and 10 all show the mooring beam **107** as relatively horizontal, this is not necessary as the relative horizontal and vertical distances between the float center of buoyancy and the mooring buoy pivot point determine the desired stabilizing moments, not the orientation or shape of mooring beam **107.**

Embodiments of the present invention can utilize either single PTO or multiple PTOs. When multiple adjacent floats **4** are utilized, they can drive a common PTO input axel **116** axis **52.** Alternatively, single or multi-float embodiments can utilize multiple PTOs including using one PTO for the primary power stroke, when wave crests concurrently raise the float **4** while driving it rearward. A second PTO can be used to capture energy on the return stroke thus, if desired, limiting each PTO to a single direction of rotation by using one-way clutches or clutch bearings.

Embodiments of the present disclosure also can utilize one float **4** or multiple adjacent floats with or without the arcuate extension **5** illustrated in FIGS. 1, 2, 3, 5, 6, or 9 and without part or all of the float back **2** combined with any arcuate extension **5** being concave or semi-circular about a center at or near float arm **51** pivot point **52.** The use of at least one partial or total non-concave or non-semi-circular float back and/or lower extension, however, will displace more water behind the float as the float is displaced upwardly and rearwardly in response to each oncoming wave which displacement will produce a back wave that will transport away a portion of the wave energy otherwise captured by the WEC.

The float back **2** of the present disclosure with or without any attached or float integral lower extension **5,** whether concave arcuate (as shown in FIGS. 1,2,3,5,6, or 9), flat and inclined (FIG. 8) or other shapes (not shown) can span an arcuate length about PTO input point **52** of as little as 30 degrees or as much as 270 degrees. It is desirable, however, to have the float draft equal to the average wave height or at least a substantial portion thereof, such that it protrudes significantly down into the water column.

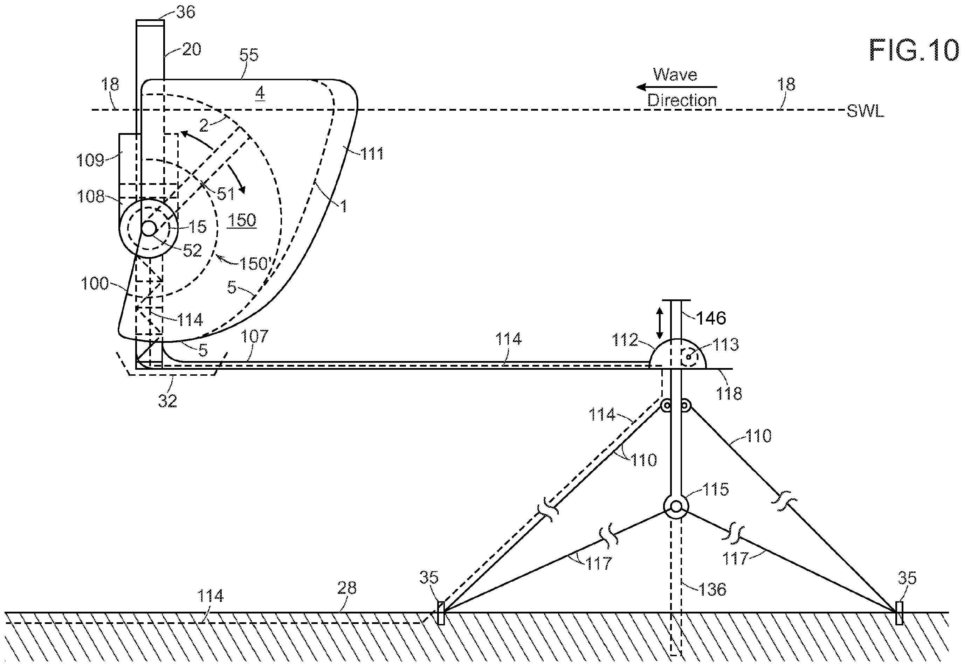

Referring now to FIG. 10, a WEC apparatus is shown with a central single spar (**20** and **100**) and two floats **4** having a convex front face **1,** an arcuate semi-circular rear wall **2,** and a concave (when viewed from the rear) lower float extension **5** integral with the lower float body **4.** The arcuate length (including the integral lower float extension **5**) about the PTO input shaft center axis **52** is large (over 180 degrees) relative to most other illustrated embodiments of the present invention (which range from 60 to 90 degrees). Also shown are substantially upright partial **150'** (dotted line) or full **150** (solid line) aft float side plates extending rearward from the float(s) **4** rear wall **2** that entrap water mass behind the rear float walls **2** and reduce rearward frame **20** and **100** from pitching while preventing entrapped water mass behind the rear wall **2** from escaping around the float rear wall edges. Also shown are optional forward float side shields **111** that prevent energy containing oncoming wave water from spilling around the float **4** front **1** lateral edges. While a convex float forward face can slightly increase float volume and cost, it provides certain hydrodynamic efficiency advantages (including protruding deeper into the water column) and is still much less costly than utilizing the large diameter stationary central cylinder of the Salter Duck and other more recent "Duck Derivative" WECs like the Columbia StingRay and the WEPTOS WECs.

The float front face **1** of the present invention is shown in FIGS. 1,2,3, and 8 as flat and inclined upward and outward while the float front face 1 in FIGs 5,6, and 7 (when viewed from the front) are concave (also upward and outward) and the front face **1** of Fig. 10 is shown as convex. The lower float extension **5** is shown as convex (when viewed from the front and concave from the back) in several embodiments or flat in others. All front face and lower float extension shapes or combinations of shapes are included within the present invention. The selection of the front face and any lower extension shape is dependent upon the arcuate length of the float back **2** (with any lower extension **5**), the float draft relative to average and extreme wave height, and other hydrodynamic factors.

All of the embodiments of the present invention shown in FIGS. 5-10 utilize substantially more mooring cable **110** and **117** (or **123, 124, 125** in FIG. 7) tension than the prior embodiments of FIGS. 1-3 because the cable connection to the seabed utilizes seabed mass to help motion stabilize second body or frame **20, 100** through its rigid connection **119** to mooring beam **107.** Large waves impacting float **4** front face **1** can produce high instantaneous "snap loads", especially on the fore cable **110** or its seabed anchor or connection **35.** While not explicitly shown, there are numerous marine cable shock absorber mechanisms to absorb and reduce cable "snap loads" that could be utilized.

Embodiments of the present invention shown in FIGS. 1-3 and 5-10 all utilize swing or drive arms **51** of a fixed length. Any of these embodiments can utilize variable-length drive arms as shown in parent patent No. 10,094,356 Fig. 7, which arm length could be controllably varied during wave cycles (as shown in FIG.7 of the `356 patent) or manually changed to accommodate seasonal changes in average wave height at any given deployment site.

Embodiments of the present invention described in FIGS. 1 through 10 are not restricted to electric or hydraulic PTOs utilizing rotary inputs. The drive axis **52** and axel(s) **116** of the present invention can include a crank mechanism attached to a linear hydraulic cylinder, linear electric generator, or ball screw or other linear mechanical drive. The crank can be so arranged such that the float(s) **4** of any of the embodiments of the present invention can still rotate a full 360° without mechanical interference with the mono-spar or multi-spar frame 100, drag plates 33, mooring beam 107 or other WEC components.

## Claims

1. A wave energy converting device for converting energy of water waves into electrical power, pressurized fluid, or other useful or transportable energy comprising:
at least one float (4) having a buoyant float body with a center of buoyancy;
a base (100, 109 and 20) comprising a body or frame (100) having at least one base pivot point or base pivot axis (52) to which the at least one float (4) is movably connected by at least one swing or drive arm (51) to which the at least one base pivot point or base (52) pivot axis is located substantially aft or down-sea of the at least one float's center of buoyancy and substantially below a still water line (SWL)(18), wherein the at least one swing or drive arm controls an orientation and path of a wave-induced relative motion between the at least one float (4) and the base (100, 109 and 20);
a submerged mooring connection point (115) which point's position is substantially motion stabilized, restrained, or fixed by at least one device selected from the group consisting of mooring lines (110), submerged or surface mooring buoys (112), seabed affixed or semi-submerged spars (115), pilings or towers, drag plates or planes, liquid or solid ballasts, seabed attachments (35), gravity weights, piers, platforms, docks, breakwaters, seawalls, shorelines, barges, ships, floating vessels, and combinations thereof;
at least one elongated mooring beam (107) rigidly connected to the base body or frame (100, 109 and 20) extending and pivotably connected in a horizontal and/or vertical plane to the submerged mooring connection point (115) which point is located both substantially fore or up-sea of, and below, the at least one float's center of buoyancy;
at least one power take-off (PTO) apparatus (15) secured to or within the base (100, 109 and 20) to be driven by at least one force generated by the wave-induced relative motion between the at least one float (4) and the base through the at least one swing or drive arm (51), or to drive the at least one float during certain portions of each wave cycle;
**characterized by** the at least one elongated mooring beam (107) being rigidly connected to the base body or frame via a rigid connection (119), wherein vertical and horizontal dimensions between the at least one float's center of buoyancy and the mooring connection point (115) are chosen such that during a typical wave cycle, a force moment produced by wave lateral or surge forces applied to the at least one float (4) is substantially countered by an opposing force moment produced by wave vertical heave or buoyant forces applied to the at least one float thus reducing or eliminating undesirable rotation about, or translation of, the at least one base pivot point or base pivot axis (52), which base rotation or translation would otherwise reduce relative motion between the base and the at least one float.

2. The wave energy converting device of claim 1 wherein the at least one float (4), alone or in combination with adjacent floats, has a wave front width greater than a front-to-back depth, excluding any float attachments, extensions (5), or appendages, and having a wave-impacting forward wall or face substantially linear, arcuate, or combinations thereof, in either vertical or horizontal plane section, which face (1) is oriented or self-orienting parallel to prevailing or oncoming wave fronts.

3. The wave energy converting device of claim 1 wherein the at least one float (4) comprises a rearward or aft facing rear wall (2) which rear wall may be vertically upright or inclined and either linear or arcuate, or combinations thereof, or having a rear wall the majority of which, including any lower extensions thereof, is substantially arcuate and concave and having a radius of curvature approximating an arcuate wave-induced motion path of the rear wall about the at least one base pivot point or base pivot axis (52) and approximately concentric about the at least one pivot point or base pivot axis.

4. The wave energy converting device of claim 3 wherein an arcuate length of the rear wall (2) about the at least one base pivot point or base pivot axis (52), including any lower extensions (5) thereof, spans an arcuate angle of not less than about 30° and not more than about 225°.

5. The wave energy converting device of claim 1 wherein the at least one float (4) has at least one internal cavity which can be controllably partially or fully flooded with seawater (9) or drained through apertures (8) to alter the at least one float's mass and buoyancy.

6. The wave energy converting device of claim 1 wherein the at least one float (4) has a center of gravity, has at least one interior cavity, and can be fully submerged with its center of gravity substantially below the base pivot point (52) or axis during severe sea states either by at least partially seawater flooding at least one interior cavity or by forcibly rotating the at least one float downward using the at least one drive or swing arm (51), or combinations thereof, and can be subsequently raised to or above the SWL (18) and drained to resume power generation.

7. The wave energy converting device of claim 1 wherein the at least one float (4) can be rotated about the at least one base pivot point or base pivot (52) axis a full 360° without mechanical interference with the base or attachments thereto.

8. The wave energy converting device of claim 1 wherein the base (100, 109 and 20) is an at least partially submerged frame comprised of at least one substantially upright spar (20) with at least two floats (4) each pivotably attached at a spar pivot point or axis (52) either directly by at least one drive arm or indirectly through at least one drive axel (116) attached to the at least one drive arm (51) and at the at least one base pivot point or base pivot axis (52).

9. The wave energy converting device of claim 8 wherein the at least one substantially upright spar (100, 109 and 20) is buoyant and has a center of gravity with a center of buoyancy substantially above its center of gravity, the at least one substantially upright spar having at least one substantially horizontal surface drag plate (33) or one vertical drag plate (102) affixed at or near a bottom of the at least one substantially upright spar.

10. The wave energy converting device of claim 1 wherein a lateral and/or a vertical position of the submerged mooring connection point (115) is substantially stabilized by at least one tensioned seabed affixed cable (110) connected to a buoyant submerged mooring buoy (112) or spar, column or shaft (146).

11. The wave energy converting device of claim 1 wherein a lateral and/or a vertical position of the submerged mooring connection point (115) is substantially stabilized by a substantially upright buoy (112) or spar, column or shaft (146) or column having buoyancy which upright and lateral position is maintained either by a connection to a seabed (28) or by its buoyancy and multiple tensioned seabed affixed cables (110) attached to upper and lower positions on the substantially upright buoy or spar or column.

12. The wave energy converting device of claim 11 wherein the at least one elongated mooring beam (107) connection to the submerged mooring connection point (115) is configured to allow the mooring beam to rotate in a horizontal plane to weather vane or self-orient to accommodate changes in wave front direction or to allow the submerged mooring connection point to slowly rise or fall vertically along the substantially upright buoy (112) or spar, column or shaft (146) to accommodate rising or falling tidal changes in the SWL (18).

13. The wave energy converting device of claim 1 wherein the at least one elongated mooring beam (107) has a forward end (121) and is buoyant, wherein its forward end provides a position stabilized mooring point (131), the at least one elongated mooring beam being position stabilized in a vertical plane by at least two tensioned cables (123. 124) rotatably attached to at least one seabed fixed point (35).

14. The wave energy converting device of claim 1 wherein the at least one float (4) has a float body, a float forward wall (1), a float rearward wall (2) and substantially upright port and starboard sides, wherein the sides are extended fore (111) of the float forward wall or aft (150) of the float rearward wall or any lower extensions (5) thereof to reduce water mass from waves from spilling around sides of the float body.

## Patentansprüche

1. Wellenenergiewandlungsvorrichtung zum Umwandeln von Energie von Wasserwellen in elektrische Energie, druckbeaufschlagtes Fluid oder andere nützliche oder transportable Energie, umfassend:
mindestens einen Schwimmer (4), der einen schwimmfähigen Schwimmerkörper mit einem Verdrängungsschwerpunkt aufweist;
eine Basis (100, 109 und 20), umfassend einen Körper oder Rahmen (100) mit mindestens einem Basisschwenkpunkt oder einer Basisschwenkachse (52), mit welcher der mindestens eine Schwimmer (4) durch mindestens einen Schwenk- oder Antriebsarm (51), zu dem der mindestens eine Basisschwenkpunkt oder die Basisschwenkachse (52) im Wesentlichen hinter oder unter dem mindestens einen Verdrängungsschwerpunkt des Schwimmers im Meer und im Wesentlichen unter einer Ruhewasserlinie (SWL) (18) positioniert ist, bewegbar verbunden ist, wobei der mindestens eine Schwenk- oder Antriebsarm eine Ausrichtung und einen Weg einer welleninduzierten relativen Bewegung zwischen dem mindestens einen Schwimmer (4) und der Basis (100, 109 und 20) steuert;
einen eingetauchten Verankerungsverbindungspunkt (115), wobei die Position des Punktes durch mindestens eine Vorrichtung, die aus der Gruppe ausgewählt ist, die Verankerungsleitungen (110), eingetauchte oder an der Oberfläche befindliche Verankerungsbojen (112), auf dem Meeresboden befestigte oder halb eingetauchte Spieren (115), Pfahlkonstruktionen oder Türme, Schleppplatten oder -flächen, flüssige oder feste Ballaste, Meeresbodenbefestigungen (35), Gravitationsgewichte, Piers, Plattformen, Docks, Wellenbrecher, Seemauern, Küstenstreifen, Kähne, Schiffe, schwimmende Fahrzeuge, und Kombinationen davon umfasst, im Wesentlichen bewegungsstabilisiert, -eingeschränkt oder fixiert ist;
mindestens einen langgezogenen Verankerungsträger (107), der starr mit dem Grundkörper oder Rahmen (100, 109 und 20) verbunden ist, der sich in einer horizontalen und/oder vertikalen Ebene zu dem eingetauchten Verankerungsverbindungspunkt (115) erstreckt und schwenkbar mit ihm verbunden ist, wobei sich dieser Punkt im Wesentlichen vor oder oberhalb der Meeresoberfläche und unterhalb des Verdrängungsschwerpunkts des mindestens einen Schwimmers befindet;
mindestens eine Nebenabtriebs- (PTO-) Vorrichtung (15), die an oder innerhalb der Basis (100, 109 und 20) befestigt ist, so dass sie von mindestens einer Kraft, die durch die welleninduzierte relative Bewegung zwischen dem mindestens einen Schwimmer (4) und der Basis durch den mindestens einen Schwenk- oder Antriebsarm (51) erzeugt wird, angetrieben wird, oder um den mindestens einen Schwimmer während bestimmter Abschnitte jedes Wellenzyklus anzutreiben;
**dadurch gekennzeichnet, dass** der mindestens eine langgezogene Verankerungsträger (107) über eine starre Verbindung (119) starr mit dem Basiskörper oder Rahmen verbunden ist, wobei vertikale und horizontale Abmessungen zwischen dem Verdrängungsschwerpunkt des mindestens einen Schwimmers und dem Verankerungsverbindungspunkt (115) so gewählt sind, dass während eines typischen Wellenzyklus einem durch laterale oder vertikale Wellenkräfte, die auf den mindestens einen Schwimmer (4) angewendet werden, produzierten Kraftmoment durch ein entgegengesetztes Kraftmoment, das durch vertikale, laterale oder Auftriebskräfte produziert wird, substanziell entgegengewirkt wird, wodurch eine unerwünschte Drehung um den mindestens einen Basisschwenkpunkt oder die mindestens eine Basisschwenkachse (52) oder deren unerwünschte Verschiebung, die anderenfalls die relative Bewegung zwischen der Basis und dem mindestens einen Schwimmer reduzieren würde, reduziert oder eliminiert wird.

2. Wellenenergiewandlungsvorrichtung nach Anspruch 1, wobei der mindestens eine Schwimmer (4) allein oder in Kombination mit benachbarten Schwimmern eine Wellenfrontbreite aufweist, die größer ist als eine Front-zu-Heck-Tiefe, unter Ausschluss etwaiger Schwimmbefestigungen, Verlängerungen (5) oder von Zubehör, und in einem Abschnitt der vertikalen oder horizontalen Ebene eine vordere Wellenaufprallwand oder Stirnfläche aufweist, die im Wesentlichen linear, gewölbt oder in Kombinationen davon ausgeführt ist, wobei die Stirnfläche (1) parallel zu vorherrschenden oder entgegenkommenden Wellenfronten ausgerichtet ist oder sich ausrichtet.

3. Wellenenergiewandlungsvorrichtung nach Anspruch 1, wobei der mindestens eine Schwimmer (4) eine hintere oder nach hinten gerichtete hintere Wand (2) umfasst, wobei die hintere Wand vertikal aufrecht oder geneigt und entweder linear oder gewölbt oder in Kombinationen davon ausgeführt sein kann, oder eine hintere Wand aufweist, deren Großteil, einschließlich etwaiger unterer Verlängerungen davon, im Wesentlichen gewölbt und konkav ist und einen Wölbungsradius aufweist, der sich einem gewölbten welleninduzierten Bewegungsweg der hinteren Wand um den mindestens einen Basisschwenkpunkt oder die Basisschwenkachse (52) annähert und annähernd konzentrisch um den mindestens einen Schwenkpunkt oder die Basisschwenkachse ist.

4. Wellenenergiewandlungsvorrichtung nach Anspruch 3, wobei eine gewölbte Länge der hinteren Wand (2) um den mindestens einen Basisschwenkpunkt oder die mindestens eine Basisschwenkachse (52), einschließlich etwaiger unterer Verlängerungen (5) davon, einen Bogenwinkel von mindestens etwa 30° und höchstens etwa 225° überspannt.

5. Wellenenergiewandlungsvorrichtung nach Anspruch 1, wobei der mindestens eine Schwimmer (4) mindestens einen inneren Hohlraum aufweist, der kontrollierbar teilweise oder vollständig mit Meerwasser (9) geflutet oder durch Öffnungen (8) entleert werden kann, um die Masse und den Auftrieb des mindestens einen Schwimmers zu verändern.

6. Wellenenergiewandlungsvorrichtung nach Anspruch 1, wobei der mindestens eine Schwimmer (4) ein Gravitationszentrum aufweist, mindestens einen inneren Hohlraum aufweist und bei Zuständen schwerer See mit seinem Gravitationszentrum im Wesentlichen unter den Basisschwenkpunkt (52) oder die -achse untergetaucht werden kann, indem mindestens ein innerer Hohlraum mindestens teilweise mit Meerwasser geflutet wird oder indem der mindestens eine Schwimmer unter Verwendung des mindestens einen Antriebs- oder Schwenkarms (51) oder von Kombinationen davon zwangsweise nach unten gedreht wird und danach auf oder über die SWL (18) angehoben und geleert werden kann, um die Energieerzeugung wiederaufzunehmen.

7. Wellenenergiewandlungsvorrichtung nach Anspruch 1, wobei der mindestens eine Schwimmer (4) ohne mechanische Beeinflussung der Basis oder von Befestigungen daran um volle 360° um den mindestens einen Basisschwenkpunkt oder die mindestens eine Basisschwenkachse (52) gedreht werden kann.

8. Wellenenergiewandlungsvorrichtung nach Anspruch 1, wobei die Basis (100, 109 und 20) ein mindestens teilweise untergetauchter Rahmen ist, der aus mindestens einer im Wesentlichen aufrechten Spiere (20) mit mindestens zwei Schwimmern (4) besteht, die jeweils schwenkbar entweder direkt durch mindestens einen Antriebsarm oder indirekt durch mindestens eine Antriebsachse (116), die an dem mindestens einen Antriebsarm (51) und an dem mindestens einen Basisschwenkpunkt oder der mindestens einen Basisschwenkachse (52) angebracht ist, an einem Spierenschwenkpunkt oder einer Spierenschwenkachse (52) angebracht sind.

9. Wellenenergiewandlungsvorrichtung nach Anspruch 8, wobei die mindestens eine im Wesentlichen aufrechte Spiere (100, 109 und 20) schwimmfähig ist und ein Gravitätszentrum mit einem Verdrängungsschwerpunkt aufweist, der sich im Wesentlichen über seinem Gravitätszentrum befindet, wobei die mindestens eine aufrechte Spiere mindestens eine im Wesentlichen horizontale Oberflächenschleppplatte (33) oder eine vertikale Schleppplatte (102) aufweist, die an oder nahe einer Unterseite der mindestens einen im Wesentlichen aufrechten Spiere befestigt ist.

10. Wellenenergiewandlungsvorrichtung nach Anspruch 1, wobei eine laterale und/oder eine vertikale Position des untergetauchten Verankerungsverbindungspunkts (115) durch mindestens ein gespanntes, auf dem Meeresboden befestigtes Seil (110), das mit einer schwimmfähigen, untergetauchten Verankerungsboje (112) oder einer Spiere, Säule oder einem Pfosten (146) verbunden ist, substanziell stabilisiert ist.

11. Wellenenergiewandlungsvorrichtung nach Anspruch 1, wobei eine laterale und/oder eine vertikale Position des untergetauchten Verankerungsverbindungspunkts (115) durch eine im Wesentlichen aufrechte Boje (112) oder Spiere, Säule oder einen Pfosten (146) oder eine Säule mit Schwimmfähigkeit, deren aufrechte und laterale Position entweder durch eine Verbindung mit dem Meeresboden (28) oder durch ihren Auftrieb und mehrere gespannte, am Meeresboden befestigte Seile (110), die an oberen und unteren Positionen der im Wesentlichen aufrechten Boje oder Spiere oder Säule angebracht sind, substanziell stabilisiert ist.

12. Wellenenergiewandlungsvorrichtung nach Anspruch 11, wobei die Verbindung des mindestens einen langgezogenen Verankerungsträgers (107) mit dem untergetauchten Verankerungsverbindungspunkt (115) dazu konfiguriert ist, dem Verankerungsträger zu gestatten, sich in einer horizontalen Ebene zu einer Wetterfahne zu drehen oder sich selbst auszurichten, um sich an Veränderungen in der Wellenfrontrichtung anzupassen oder dem untergetauchten Verankerungsverbindungspunkt zu gestatten, vertikal entlang der/des im Wesentlichen aufrechten Boje (112) oder Spiere, Säule oder Pfostens (146) langsam aufzusteigen oder abzusinken, um sich an gezeitenbedingte Veränderungen in Form des Steigens oder Fallens der SWL (18) anzupassen.

13. Wellenenergiewandlungsvorrichtung nach Anspruch 1, wobei der mindestens eine langgezogene Verankerungsträger (107) ein vorderes Ende (121) aufweist und schwimmfähig ist, wobei sein vorderes Ende einen positionsstabilisierten Verankerungspunkt (131) bereitstellt, wobei der mindestens eine langgezogene Verankerungsträger in einer vertikalen Ebene durch mindestens zwei gespannte Seile (123, 124), die drehbar an dem mindestens einen im Meeresboden befestigten Punkt (35) angebracht sind, positionsstabilisiert ist.

14. Wellenenergiewandlungsvorrichtung nach Anspruch 1, wobei der mindestens eine Schwimmer (4) einen Schwimmerkörper, eine vordere Schwimmerwand (1), eine hintere Schwimmerwand (2) und im Wesentlichen aufrechte Back- und Steuerbordseiten aufweist, wobei sich die Seiten vor (111) der vorderen Wand des Schwimmers oder nach (150) der hinteren Wand des Schwimmers oder etwaigen unteren Verlängerungen (5) davon erstrecken, um Wassermassen von Wellen durch das Überlaufen um Seiten des Schwimmerkörpers zu reduzieren.

## Revendications

1. Dispositif de conversion d'énergie houlomotrice pour convertir l'énergie de vagues d'eau en électricité, en fluide pressurisé, ou autre énergie utile ou transportable comprenant :
au moins un flotteur (4) présentant un corps de flotteur avec un centre de poussée ;
une base (100, 109 et 20) comprenant un corps ou cadre (100) présentant au moins un point de pivotement de base ou axe de pivotement de base (52) auquel le au moins un flotteur (4) est relié de façon mobile par au moins un bras oscillant ou d'entraînement (51), auquel le au moins un point de pivotement de base ou axe de pivotement de base (52) est situé sensiblement en arrière ou vers le bas du centre de poussée du au moins un flotteur et sensiblement au-dessous d'un niveau d'eau calme (SWL) (18), dans lequel le au moins un bras oscillant ou d'entraînement commande l'orientation et le trajet d'un mouvement relatif induit par la houle entre le au moins un flotteur (4) et la base (100, 109 et 20) ;
un point d'attache d'amarrage immergé (115) dont la position est sensiblement stabilisée en mouvement, retenu ou fixé par au moins un dispositif choisi dans le groupe consistant en les lignes d'amarrage (110), les bouées d'amarrage immergées ou de surface (112), les espars fixés au fond marin ou semi-immergés (115), les pylônes ou tours, les plaques ou plans de traînée, les ballasts liquides ou solides, les équipements de fixation au fond marin (35), les contrepoids, les jetées, les plateformes, les docks, les brise-lames, les digues, les côtes, les barges, les navires, les bâtiments flottants, et leurs combinaisons ;
au moins une poutre d'amarrage allongée (107) fixée rigidement au corps ou au cadre de base (100, 109 et 20) s'étendant en direction du et reliée à pivotement dans un plan horizontal et/ou vertical au point d'attache d'amarrage immergé (115), ce point se trouvant sensiblement en avant de ou face à la houle par rapport, et au-dessous, du centre de poussée du au moins un flotteur ;
au moins un appareil (15) de prise de force (PTO) fixé à ou à l'intérieur de la base (100, 109 et 20) destiné à être entraîné par au moins une force générée par le mouvement relatif induit par la houle entre le au moins un flotteur (4) et la base par l'intermédiaire du au moins un bras oscillant ou d'entraînement (51) ou pour entraîner le au moins un flotteur pendant certaines parties de chaque cycle de houle ;
**caractérisé en ce que** la au moins une poutre d'amarrage allongée (107) est fixée rigidement au corps ou cadre de base par l'intermédiaire d'un raccord rigide (119), dans lequel les dimensions verticale et horizontale entre le centre de poussée du au moins un flotteur et le point d'attache d'amarrage (115) sont choisies de sorte qu'au cours d'un cycle de houle caractéristique, un moment de force produit par les forces latérales ou de pilonnement appliquées au au moins un flotteur (4) soit sensiblement contré par un moment de force opposé produit par les forces de cavalement vertical de la houle ou forces de poussée d'Archimède appliquées au au moins un flotteur, réduisant ou éliminant ainsi une rotation indésirable autour, ou une translation, du au moins un point de pivotement de base ou axe de pivotement de base (52), laquelle rotation ou translation de la base réduirait sinon le mouvement relatif entre la base et le au moins un flotteur.

2. Dispositif de conversion d'énergie houlomotrice selon la revendication 1, dans lequel le au moins un flotteur (4), seul ou en combinaison avec des flotteurs voisins, présente une largeur de front de houle supérieure à une profondeur d'avant en arrière, en excluant tous les équipements, extensions (5) ou appendices du flotteur et présentant une paroi ou face avant d'impact de la houle sensiblement linéaire, arquée ou une combinaison de ces derniers, que ce soit dans les sections plane verticales ou horizontales, ladite face (1) étant orientée ou s'auto-orientant parallèlement aux front de houle principaux ou arrivants.

3. Dispositif de conversion d'énergie houlomotrice selon la revendication 1 ,dans lequel le au moins un flotteur (4) comprend une paroi orientée vers l'arrière (2), ladite paroi arrière pouvant être verticale ou inclinée et soit linéaire, soit arquée, soit une combinaison des deux, ou présentant une paroi arrière dont la plus grande part, y compris ses éventuelles extensions inférieures, est sensiblement arquée et concave et présente un rayon de courbure s'approchant d'un trajet de mouvement induit par la houle de la paroi arrière arqué autour du au moins un point de pivotement de base ou axe de pivotement de base (52) et approximativement concentrique avec le au moins un point de pivotement ou axe de pivotement.

4. Dispositif de conversion d'énergie houlomotrice selon la revendication 3, dans lequel une longueur arquée de la paroi arrière (2) autour du au moins un point de pivotement de base ou axe de pivotement de base (52), y compris ses éventuelles extensions inférieures (5), couvre un angle d'arc supérieur ou égal à environ 30° et inférieur ou égal à environ 225°.

5. Dispositif de conversion d'énergie houlomotrice selon la revendication 1, dans lequel le au moins un flotteur (4) présente au moins une cavité interne qui peut être partiellement ou totalement remplie de façon contrôlable par de l'eau de mer (9) ou vidangée à travers des ouvertures (8) pour modifier la masse et la flottabilité du au moins un flotteur.

6. Dispositif de conversion d'énergie houlomotrice selon la revendication 1, dans lequel le au moins un flotteur (4) présente un centre de gravité, comprend au moins une cavité interne et peut être entièrement immergé avec son centre de gravité sensiblement au-dessous du point ou de l'axe de pivotement de base (52) lors d'états de mer difficile, soit en remplissant au moins partiellement d'eau de mer au moins une cavité interne, soit en forçant la rotation du au moins un flotteur vers le bas au moyen du au moins un bras oscillant ou d'entraînement (51), ou en combinant les deux, et peut être par la suite remonté jusqu'à ou au-dessus du SWL (18) et vidangé pour reprendre la génération de puissance.

7. Dispositif de conversion d'énergie houlomotrice selon la revendication 1, dans lequel le au moins un flotteur (4) peut subir une rotation complète autour du au moins un point de pivotement de base ou axe de pivotement de base (52) sur 360° sans interférence mécanique avec la base ou ses équipements.

8. Dispositif de conversion d'énergie houlomotrice selon la revendication 1, dans lequel la base (100, 109 et 20) est un cadre au moins partiellement immergé composé d'au moins un espar sensiblement vertical (20) avec au moins deux flotteurs (4) chacun reliés à pivotement au niveau d'un point ou axe de pivotement d'espar (52), soit directement par au moins un bras d'entraînement, soit indirectement par au moins un essieu d'entraînement (116) fixé au au moins un bras d'entraînement (51) et au niveau du au moins un point de pivotement de base ou axe de pivotement de base (52).

9. Dispositif de conversion d'énergie houlomotrice selon la revendication 8, dans lequel le au moins un espar sensiblement vertical (100, 109 et 20) est flottant et présente un centre de gravité avec un centre de poussée sensiblement au-dessus de son centre de gravité, le au moins un espar sensiblement vertical comprenant au moins une plaque de traînée de surface sensiblement horizontale (33) ou une plaque de traînée verticale (102) fixée au niveau ou à proximité du bas du au moins un espar sensiblement vertical.

10. Dispositif de conversion d'énergie houlomotrice selon la revendication 1, dans lequel une position latérale et/ou verticale du point d'attache d'amarrage immergé (115) est sensiblement stabilisée par au moins un câble en tension fixé au fond marin (110) relié à une bouée (112) ou un espar, une colonne ou un puits d'amarre (146) flottant immergé.

11. Dispositif de conversion d'énergie houlomotrice selon la revendication 1, dans lequel une position latérale et/ou verticale du point d'attache d'amarrage immergé (115) est sensiblement stabilisée par une bouée (112) ou un espar sensiblement vertical, une colonne ou un puits d'amarrage (146) ou une colonne flottante qui est et dont la position verticale et latérale est maintenue soit par une liaison à un fond marin (28) soit par sa flottaison et de multiples câbles en tension fixés au fond marin (110) rattachés à des positions supérieures ou inférieures sur la bouée ou espar ou colonne sensiblement vertical.

12. Dispositif de conversion d'énergie houlomotrice selon la revendication 11, dans lequel la connexion de la au moins une poutre d'amarrage allongée (107) au point d'attache d'amarrage immergé (115) est configurée pour permettre à la poutre d'amarrage de tourner dans un plan horizontal en girouette ou en s'auto-orientant pour suivre les changements de direction de front de houle ou permettre au point d'attache d'amarrage immergé de s'élever ou de s'abaisser lentement verticalement le long de la bouée (112) ou de l'espar, de la colonne ou du puits (146) sensiblement vertical pour suivre les montées et descente de SWL (18) dus à la marée.

13. Dispositif de conversion d'énergie houlomotrice selon la revendication 1, dans lequel la au moins une poutre d'amarrage allongée (107) présente une extrémité avant (121) et est flottante, dans lequel son extrémité avant fournit un point d'amarrage stabilisé en position (131), la au moins une poutre d'amarrage allongée étant stabilisée en position dans un plan vertical par au moins deux câbles en tension (123, 124) fixés à rotation au au moins un point fixe du fond marin (35).

14. Dispositif de conversion d'énergie houlomotrice selon la revendication 1, dans lequel le au moins un flotteur (4) présente un corps de flotteur, une paroi avant de flotteur (1), une paroi arrière de flotteur (2) et des côtés bâbord et tribord sensiblement verticaux, dans lequel les côtés s'étendent en avant (111) de la paroi avant de flotteur ou en arrière (150) de la paroi arrière de flotteur ou de leurs éventuelles extensions inférieures (5) pour empêcher le déversement de la masse d'eau en provenance des vagues autour des côtés du corps de flotteur.
